(19) Europäisches Patentamt
European Patent Office
Office européen des brevets

(11) **EP 3 284 552 B1**

(12) **EUROPEAN PATENT SPECIFICATION**

(45) Date of publication and mention
of the grant of the patent:
**03.08.2022 Bulletin 2022/31**

(21) Application number: **16779746.3**

(22) Date of filing: **01.04.2016**

(51) International Patent Classification (IPC):
**B22F 1/054** (2022.01)   **B22F 1/102** (2022.01)
**B22F 9/24** (2006.01)    **B23K 35/30** (2006.01)
**H01B 1/22** (2006.01)

(52) Cooperative Patent Classification (CPC):
**B23K 35/3006; B22F 1/054; B22F 1/102;
B22F 9/24; H01B 1/22**

(86) International application number:
**PCT/JP2016/001882**

(87) International publication number:
**WO 2016/166948 (20.10.2016 Gazette 2016/42)**

(54) **SILVER FINE PARTICLE COMPOSITION**

SILBERFEINPARTIKELZUSAMMENSETZUNG

COMPOSITION DE FINES PARTICULES D'ARGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2015 JP 2015085404**

(43) Date of publication of application:
**21.02.2018 Bulletin 2018/08**

(73) Proprietor: **Bando Chemical Industries, Ltd.
Kobe-shi, Hyogo 650-0047 (JP)**

(72) Inventors:
 • **MATSUI, Miki
   Kobe-shi
   Hyogo 650-0047 (JP)**
 • **NAKAJIMA, Naoya
   Kobe-shi
   Hyogo 650-0047 (JP)**
 • **WATANABE, Tomofumi
   Kobe-shi
   Hyogo 650-0047 (JP)**

(74) Representative: **Mewburn Ellis LLP
Aurora Building
Counterslip
Bristol BS1 6BX (GB)**

(56) References cited:
   WO-A1-2014/084275    WO-A1-2015/190076
   JP-A- 2013 214 733    JP-A- 2013 214 733
   US-A1- 2014 306 167

**Description**

TECHNICAL FIELD

The present invention relates to a fine silver particle composition which is widely usable as a bonding composition for bonding electronic parts at a low temperature, and more specifically, relates to a fine silver particle composition which can give high bonding strength at a low bonding temperature.

BACKGROUND ARTS

It has been known that metal nanoparticles or metal colloidal particles with a great specific surface area and high reaction activity have a property to be fused at a low temperature (low-temperature sintering) compared to bulk and metal atoms, and an application to various fields is expected by utilizing this property.

For example, a conductive ink and a composition for bonding which utilize the low-temperature sintering property of fine metal particle, particularly fine silver particles have been attracted. Since the fine silver particles after bonding have almost the same physical properties as a usual silver bulk, the fine silver particles after bonding have very high heat resistance and reliability and exothermic property.

Here, in Patent Literature 1 (Japanese Patent Laid-Open Application 2012-162767), there is disclosed a method of manufacturing a coated metal fine particle including: a first step in which an amine mixture containing an alkylamine having 6 or more carbon atoms and an alkylamine having 5 or less carbon atoms is mixed with a metal compound containing a metal atom, thus producing a complex compound containing the metal compound and an amine; and a second step in which metal fine particles are produced by decomposing the complex compound, by heating the complex compound.

In the above producing method of the coated metal fine particle of Patent Literature 1, since it becomes possible to use a variety of amines depending on the use and the like of the coated metal fine particles, it becomes possible to provide coated metal fine particles that can be smoothly sintered at a temperature of, for example 100°C or lower, and it becomes possible to form a conductive film and a conductive wire on a poorly heat-resistant plastic substrate such as PET and polypropylene.

Further, in Patent Literature 2 (Japanese Patent Laid-Open Application 2012-131894), there is disclosed a conductive ink composition comprising a metal powder, a coordinating compound and copper formate particles, wherein the metal powder comprises a metal powder in which an average particle size ratio of metal particles (B) / metal particles (A) = 0.10 to 0.45.

In the above conductive ink composition of Patent Literature 2, when an alkoxyamine is used as a dispersant and particle size of the fine particle is precisely defined, a bonding layer having few voids and high film density can be obtained, and the electric conduction part which is formed after heat treatment has a high film density and an excellent conductivity, and further it is possible to form the electric conduction part such as a conductive pattern by easy methods such as applying, filling or heating.

PRIOR ART LITERATURE

Patent Literature

Patent Literature 1: Japanese Patent Laid-Open Application 2012-162767
Patent Literature 2: Japanese Patent Laid-Open Application 2012-131894
Patent Literature 3: JP 2013 214733 A proposes a thermally conductive paste.

SUMMARY OF INVENTION

Problem to be solved by the Invention

The fine metal particle coated with organic components begins to be sintered by removing the organic components with heating, or the like. Therefore, in order to form a dense bonding layer at a low temperature, it is necessary to remove the coating organic components sufficiently at a desired bonding temperature.

However, in the coated fine metal particle obtained by the producing method of the above Patent Literature 1 and the conductive ink composition of Patent Literature 2, there is a problem that the removing property of the coating organic components is not optimized with respect to "bonding use" at a low temperature (for example, around 150°C)

Considering the above circumstances, the object of the present invention is to provide a fine silver particle composition which is usable as a bonding composition, and a fine silver particle composition which can give high bonding strength at a low bonding temperature.

Means for solving the problem

In order to realize the above objects, the present inventor has been studied intensively as to kinds and amounts of the dispersant and the removing property of the coating organic components, and has found that when a dispersant containing an alkoxyamine in a preferred amount, the object can be realized effectively, and then has completed the present invention.

Namely, according to the first invention of the present invention, there is provided a fine silver particle composition according to claim 1.

The alkoxyamine is localized (attached) to at least a port of the surface of the fine silver particle in the fine silver particle. Further, the amino group in one molecule of the alkoxyamine is easy to exhibit alkaline property Accordingly, when the alkoxyamine is localized (attached) to at least a port of the surface of the fine silver particle (in other words, when at least a port of the surface of the fine silver particle is covered), the organic component and the inorganic particle can cause sufficient affinity, and the fine silver particles can be prevented from agglomeration with each other (improve the dispersing property). Namely, since the alkoxyamine is adsorbed via the functional group on the surface of the fine silver particle in an appropriate strength to block the contact of fine silver particles with each other, the amine contributes the stability of the fine silver particles in the reservation state. In addition, by heating, the amine moves or evaporates from the surface of the fine silver particles, the fusion of the fine silver particles to each other can be accelerated.

Further, since the alkoxyamine adhered on at least a part of the surface of the fine silver particles can be easily removed by heating, it is ensured the good low temperature sinterability (for example a sinterability at 100 to 200°C) of the fine silver particle. Here, when the alkoxyamine is the short chain amine having 5 or less carbon atoms, the alkoxyamine adhered on at least a part of the surface of the fine silver particles can be easily removed by heating.

A content of the dispersant is 0.1 to 7.0 % by mass relative to a content of the fine silver particle (namely, the dispersant being 0.1 to 7.0 relative to 100 of the fine silver particle on the base of mass). When the content of the dispersant is 0.1 % by mass or more relative to the content of the fine silver particle, it is possible to exhibit the effects of the dispersant sufficiently, and when the content of the dispersant is 7.0 % by mass or less relative to the content of the fine silver particle, it is possible to reduce the amount of the dispersant remained at the bonding temperature. When the dispersant is contained in an amount of more than 7.0 % by mass relative to the content of the fine silver particle, the dispersant cannot be volatilized sufficiently by the heating of around 150°C and is remained, which results in prevention of sintering of the fine silver particles. Preferred content of the dispersant is 0.1 to 5.0 % by mass relative to the content of the fine silver particle.

Furthermore, in the fine silver particle composition of the present invention, a weight loss when heating from room temperature to 200°C is 70 % by mass or more of the whole organic components contained therein. More specifically, when carrying out the weight analysis by heating the fine silver particle composition at 10 °C/min of rate of temperature increase, a weight loss until 200°C is 70 % or more of a weight loss until 500°C which is measure in the same manner.

The partition coefficient logP of the alkoxyamine contained in the dispersant is preferably set within the range of from -1.0 to 1.4. When the partition coefficient logP of the alkoxyamine is -1.0 or less, since the polarity of the short chain amine is too high to proceed the reduction of the silver, it is difficult to control the yield of the fine silver particle, and when the partition coefficient logP is 1.5 or more, since the polarity of the amine which coordinates with the silver, it is difficult to disperse in the high polar solvent.

In the present invention, the partition coefficient logP means an octanol / water partition coefficient where n-octanol and water are used as the solvents, and a concentration Co in the octanol and a concentration Cw in water are measured, respectively, and then a the partition coefficient is obtained by calculating a common logarithm logP from the concentration ratio P=Co/Cw. Therefore, the partition coefficient logP means one index which represents a possibility whether the fine silver particles can be dispersed in what range of polar solvent. A method for measuring the partition coefficient logP is not particularly limited, and the partition coefficient can be determined by flask shaking method, a high performance chromatography (HPLC), and a calculation by using a quantitative structure activity algorithm, or the like, and preferable is to use a value of literature disclosed in the web site of National Center for Biotechnology Information, and the like.

The particle size of the fine silver particle used in the fine silver particle composition of the present embodiment is a nanometer size where the lowering of a melting point is caused, desirably 1 to 200 nm, and as occasion demand, particles having a micrometer size may be contained.

Further, to the fine silver particle composition of the present invention, various kinds of solvents and high polar solvents can be used as the dispersing medium, it is preferable that an alcohol having a boiling point of 200°C or more, or a hydrocarbon having a boiling point of 200°C or more is used as a main component. Considering the bonding at a low temperature, the dispersing medium has a lower boiling point, but when the boiling point is too low, the fine silver particle composition is dried fast, which results in bad handling property. Here, when using the dispersing medium having a boiling point of 200°C or more, it is possible to inhibit the lowering of handling property.

Generally, the high polar solvent means a solvent such as water and an alcohol having a small number of carbon atoms which is difficult to be compatible with a low polar solvent such as hexane and toluene, and according to the present invention, it is more preferable to use an alcohol having 1 to 6 carbon atoms. When using the alcohol having 1 to 6 carbon atoms is used as the high polar solvent, it is possible to avoid a problem that occurs by using the low polar solvent, for example, that, when the fine silver particle composition is laminated on a resin, the under resin layer is damaged by the solvent. Here, according to the fine silver particle composition of the present invention, since the alkoxyamine is used as the dispersant, the fine silver particles can be well dispersed in the high polar solvent.

Further, in the fine silver particle composition of the present invention, a content of the whole organic components is preferably 25.0 % by mass or less. More specifically, when carrying out the weight analysis by heating the fine silver particle composition at 10 °C/min of rate of temperature increase, a weight loss until 500°C is preferably 25 % by mass or less. The weight loss obtained by this method corresponds to the amount of the whole organic components in the fine silver particle composition.

In the fine silver particle composition of the present invention, it is further preferable to contain the polymer dispersant. When adding the polymer dispersant, it is possible to control the viscosity of the fine silver particles in addition to improvement of the dispersion stability.

Here, the polymer dispersant preferably has an acid value. The "dispersant having an acid value" includes all of the dispersants other than dispersants which do not have an amine value and a hydroxyl value as an adsorbing group or a functional group. By using the dispersant, the dispersing stability of the fine silver particles in the solvent can be improved. Here, the acid value of the dispersant is preferably 5 to 200. The reason why the "dispersant having an acid value" is preferable is not exactly clear, the present inventors assume that the dispersant can adsorb in dense manner by not only the adsorption action to the metal but also the interaction with the alkoxyamine, and as the result, it is possible to exhibit a high dispersing property while maintaining a low temperature sinterability.

When the acid value of the dispersant is 5 or more, the dispersant begins to adsorb to the metal substance where the amine is coordinated to make the surface basic through acid-basic interaction, and when being 200 or less, there is not excess amount of adsorption sites so as to be adsorbed in the suitable manner.

Here, the "acid value" is represented by a numeral of mg of potassium hydroxide required for neutralizing an acidic component contained in 1 g of the sample. The acid value can be measured by an indicator method (p-naphtholbenzein indicator) or a potentiometric titration method.

ISO6618-1997: Testing method for neutralization value by the indicator titration method → Corresponding to the indicator titration method (acid value)

ISO6619-1988: Potentiometric titration method (acid value) → Corresponding to the potentiometric titration method (acid value)

A content of the polymer dispersant is preferably 0.01 to 10.0 % by mass relative to a content of the fine silver particles. More preferable content of the polymer dispersant is 0.05 to 5.0 % by mass, further preferable content of the polymer dispersant is 0.05 to 3.0 % by mass. When the content of the polymer dispersant is 10.0 % by mass or less, the sinterability of the fine silver particles at a low temperature can be maintained, and when being 0.01 % by mass or more, the dispersion stability of the fine silver particles can be improved.

Effect of the invention

According to the present invention, a fine silver particle composition which can give high bonding strength at a low bonding temperature can be provided.

Embodiments for Solving the Problem

Hereafter, one preferred embodiment of the fine silver particle composition of the present invention will be explained in detail. Furthermore, the explanation hereafter merely mentions one embodiment of the present invention, but the present invention shall not be limited because of these, and any redundant explanation may be omitted.

(1) Fine silver particle composition

The fine silver particle composition of the present embodiment includes the fine silver particles, the dispersant containing the alkoxyamine, and a dispersing medium. In the following, these components are explained.

(1-1) Fine silver particle

An average particle size of the fine silver particles in the fine silver particle dispersion of the present embodiment is not particularly limited as long as being within the scope that will not impair the effects of the present invention, and is preferable to have an average particle size so as to cause lowering of the melting point, and for example, and may be 1 to 200 nm. In addition, further preferable is 2 to 100 nm. When the average particle size of the fine silver particles is 1 nm or more, the fine silver particle is endowed with good low temperature sinterability, and it is useful because the cost to manufacture the metal particles will not be high. Further, when being 200 nm or less, the dispersing property of the fine silver particles is not easily changed with lapse of time.

When using the fine silver particle dispersion of the present invention, for example, as material of the composition for bonding, considering a problem of migration, a metal where the ionization column is nobler than hydrogen, i.e., gold, copper, platinum and palladium may be added.

The particle size of the fine silver particles in the fine silver particle dispersion of the present embodiment may not be uniform. Further, in case that the fine silver particle dispersion contains a dispersion medium and the like mentioned after as an optional component, though there is a case that metal particle components having an average size of more than 200 nm, the metal particle component having an average particle size of more than 200 nm may be contained, as long as the components do not cause agglomeration or does not remarkably impair the effects of the present invention.

Further, it is also possible to add the metal particles with size of micron meters as a combination as needed. In such case, excellent conductive paths can be obtained by lowering of the melting point in the metal particles with size of nanometers around the metal particles with a size of micron meters.

Here, the particle size of the fine silver particles in the fine silver particle dispersion of the present embodiment can be measured by dynamic light scattering, small angle X-ray scattering or a wide-angle X-ray diffraction method. In order to show lowering of the melting point of nanosize fine silver particles, a crystallite diameter that is obtained by the wide-angle X-ray diffraction method is appropriate. For example, in the wide-angle X-ray diffraction method, more specifically, the crystallite diameter can be measured within a range of 30° to 80° of 2θ by the diffraction method, using RINT-Ultima III available from by Rigaku Corporation. In this case, a sample is rolled thinly so as to flatten a surface over a glass plate with approximately 0.1 to 1 mm of recess in the center part. Further, the crystallite diameter (D) that is calculated by assigning a half-value width of the obtained diffraction spectrum to the following Scherrer's equation by using JADE available from Rigaku Corporation is assumed to be the particle size:

$$D = K\lambda/B\cos\theta$$

Herein, K represents Scherrer constant (0.9), λ represents a wavelength of X-ray, B represents a half-value width of diffraction line, and θ represents Bragg angle.

(1-2) Dispersant containing alkoxyamine

In the fine silver particle composition of the present embodiment, the alkoxyamine is adhered to at least a port of the surface of the fine silver particle. On the surface of the fine silver particle, there may be adhered a slight amount of organic substances such as a slight amount of an organic substance which is contained initially as organic impurities, a slight amount of an organic substance which is contaminated in the producing processes mentioned after, a residual reducing agent and a residual dispersant which cannot be removed in the washing process.

As mentioned above, the amino group in one molecule of the alkoxyamine is easy to exhibit alkaline property. Accordingly, when the alkoxyamine is localized (attached) to at least a port of the surface of the fine silver particle (in other words, when at least a port of the surface of the fine silver particle is covered), the organic component and the inorganic particle can cause sufficient affinity, and the fine silver particles can be prevented from agglomeration with each other (improve the dispersing property). Namely, since the alkoxyamine is adsorbed via the functional group on the surface of the fine silver particle in an appropriate strength to block the contact of fine silver particles with each other, the amine contributes the stability of the fine silver particles in the reservation state. In addition, by heating, the amine moves or evaporates from the surface of the fine silver particles, the fusion of the fine silver particles to each other can be accelerated.

Further, since the alkoxyamine adhered on at least a part of the surface of the fine silver particles can be easily removed by heating, it is ensured the good low temperature sinterability (for example a sinterability at 100 to 200°C) of the fine silver particle. The alkoxyamine may be usual known alkoxyamines as long as being within the scope that will not impair the effects of the present invention, preferable alkoxyamine has 7 or less carbon atoms, more preferably 5 or less carbon atoms. When the alkoxyamine is the short chain amine having 5 or less carbon atoms, the alkoxyamine adhered on at least a part of the surface of the fine silver particles can be easily removed by heating.

A content of the dispersant which contains the alkoxyamine is 0.1 to 7.0 % by mass relative to a content of the fine silver particle. When the content of the dispersant is 0.1 % by mass or more relative to the content of the fine silver particle, it is possible to exhibit the effects of the dispersant sufficiently, and when the content of the dispersant is 7.0 % by mass or less relative to the content of the fine silver particle, it is possible to reduce the amount of the dispersant remained at the bonding temperature. When the dispersant is contained in an amount of more than 7.0 % by mass relative to the content of the fine silver particle, the dispersant cannot be volatilized sufficiently by the heating of around 150°C and is remained, which results in prevention of sintering of the fine silver particles. Preferred content of the dispersant is 0.1 to 5.0 % by mass relative to the content of the fine silver particle.

The above alkoxyamine may be a compound containing a functional group other than amine, such as hydroxyl group, carboxyl group, an alkoxy group, carbonyl group, an ester group or mercapto group. Further, the alkoxyamine may be used alone or in combination of two or more.

The fine silver particle composition of the present embodiment may contain a carboxylic acid in addition to the above alkoxyamine as long as being within the scope that will not impair the effects of the present invention. The carboxyl group in one molecule of the carboxylic acid has a relatively high polarity and is easy to get an interaction by the hydrogen bond, but the remaining part other than the functional groups has a relatively low polarity. Further, the carboxyl group tends to show acidic properties. Furthermore, when the carboxylic acid is localized (attached) to at least a port of the surface of the fine silver particle in the fine silver particle dispersion of the present invention (in other words, when at least a port of the surface of the fine silver particle is covered), the solvent and the fine silver particle can cause sufficient affinity, and the fine silver particles can be prevented from agglomeration with each other (improve the dispersing property).

As the carboxylic acid, a compound having at least one carboxyl group can be widely used, and examples include formic acid, oxalic acid, acetic acid, hexanoic acid, acrylic acid, octylic acid, oleic acid, and the like. The carboxyl group of a part of the carboxylic acid may form a salt with a metal ion. As the metal ion, two or more metal ions may be contained.

The above carboxylic acid may be a compound containing a functional group other than carboxyl group, such as amino group, hydroxyl group, an alkoxy group, carbonyl group, an ester group or mercapto group. In this case, it is preferable that the number of the carboxyl group is larger than the number of the functional groups other than the carboxyl group. Further, the carboxylic acid may be used alone or in combination of two or more. In addition, it is preferable that a boiling point under normal pressure is preferably 300°C or less, further preferably 250°C or less. The amine and the carboxylic acid form an amide. Since the amide group also appropriately be adsorbed on the surface of the fine silver particle, the amide group may be adhered on the surface of the fine silver particle.

(1-3) Dispersant

The fine silver particle composition of the present embodiment is a composition where the fine silver particles are dispersed in various dispersing media.

As the above dispersing medium, various kinds of solvents and high polar solvents can be used as the dispersing medium, it is preferable that an alcohol having a boiling point of 200°C or more, or a hydrocarbon having a boiling point of 200°C or more is used as a main component. Considering the bonding at a low temperature, the dispersing medium has a lower boiling point, but when the boiling point is too low, the fine silver particle composition is dried fast, which results in bad handling property. Here, when using the dispersing medium having a boiling point of 200°C or more, it is possible to inhibit the lowering of handling property, within the scope that will not impair the effects of the present invention.

Generally, the high polar solvent means a solvent such as water and an alcohol having a small number of carbon atoms which is difficult to be compatible with a low polar solvent such as hexane and toluene, and according to the present invention, it is more preferable to use an alcohol having 1 to 6 carbon atoms. When using the alcohol having 1 to 6 carbon atoms is used as the high polar solvent, it is possible to avoid a problem that occurs by using the low polar solvent, for example, that, when the fine silver particle composition is laminated on a resin, the under resin layer is damaged by the solvent. Here, according to the fine silver particle composition of the present invention, since the alkoxyamine is used as the dispersant, the fine silver particles can be well dispersed in the high polar solvent.

As the dispersing medium, it is preferable to use, for example, at least one selected from nonanol, decanol, undecanol, dodecanol, tridecanol, isotridecanol, tetradecanol, hexadecanol, dodecane, tridecane, tetradecane, pentadecane, hexadecane, phenylcyclohexane, tetralin. These dispersing media may be used alone or in combination of two or more.

(1-4) Polymer dispersant

It is preferable that the fine silver particle composition of the present embodiment further contains the polymer dispersant. By using the polymer dispersant, the dispersing stability of the fine silver particles in the solvent can be improved. Here, the polymer dispersant preferably has an acid value, and more preferably the acid value is 5 to 200.

When the acid value of the polymer dispersant is 5 or more, the polymer dispersant begins to adsorb to the silver particle where the alkoxyamine is coordinated to make the surface basic through acid-basic interaction, and when being 200 or less, since there is not excess amount of adsorption sites so as to be adsorbed in the suitable manner.

As the polymer dispersant, it is preferable to use, for example, at least one selected from SOLSPERSE 3000, 11200, 16000, 17000, 20000, 21000, 28000, DISPERBYK 111, 118, 140, 2096, 2155, 2164, BYK 410, and a higher fatty acid such as oleic acid, linolic acid, linoleic acid, recinoleic acid or stearic acid, and a higher alcohol such as Terusolve TOE-100 or Terusolve MTPH.

The content of the polymer dispersant when adding to the fine silver particle composition of the present embodiment may be adjusted depending on desired properties such as viscosity, and, for example, is preferably 0.01 to 10.0 % by mass relative to a content of the fine silver particles. More preferable content of the polymer dispersant is 0.05 to 5.0 % by mass, further preferable content of the polymer dispersant is 0.05 to 3.0 % by mass. When the content of the polymer dispersant is 10.0 % by mass or less, the sinterability of the fine silver particles at a low temperature can be maintained, and when being 0.01 % by mass or more, the dispersion stability of the fine silver particles can be improved.

(1-5) Other components

In the fine silver particle composition of the present embodiment, in addition to the above components, any components such as an oligomer component that fulfills a role, for example, as a binder, a resin component, an organic solvent (a port of solid components may be dissolved or dispersed), a surfactant, a thickener or a regulator of surface tension can be added to the components above, in order to add functions such as moderate viscosity, adhesiveness, drying characteristic or printability according to the intended use, within the scope that will not impair the effects of the present invention. Such optional components are not particularly limited.

Examples of the resin component include a polyester-based resin, a polyurethane-based resin such as blocked isocyanate, a polyacrylate-based resin, a polyacrylamide-based resin, a polyether-based resin, a melamine-based resin, and a terpene-based resin, and these may be used alone or in combination of two or more.

Examples of the thickener include a clay minerals such as clay, bentonite or hectorite; an emulsion such as a polyester-based emulsion resin, an acrylic-based emulsion resin, a polyurethane-based emulsion resin or blocked isocyanate; a cellulose derivatives such as methyl cellulose, carboxymethyl cellulose, hydroxyethyl cellulose, hydroxypropyl cellulose or hydroxypropylmethyl cellulose; a polysaccharide such as xanthane gum or guar gum, and the like are exemplified, and these may be used alone or in combination of two or more.

A surfactant which is different from the aforementioned surfactant may be added. In a multi-component solvent-series inorganic colloidal dispersion liquid, roughness on a coating surface and a bias of solid content easily occur due to a difference in a rate of volatilization upon drying. Addition of a surfactant to the fine silver particle dispersion of the present embodiment enables to suppress these disadvantages and to obtain the fine silver particle dispersion that can form a uniform conductive coating.

The surfactant that is usable in the present embodiment is not particularly limited, and any of anionic surfactants, cationic surfactants, and nonionic surfactants are usable, and, for example, alkyl benzene sulfonate, quaternary ammonium salt and the like are exemplified. Among them, since effects can be obtained with a small amount, a fluorine-contain surfactant and a silicone-containing surfactant are preferable.

(1-6) Weight loss by weight analysis

In the fine silver particle composition of the present invention, a weight loss when heating from room temperature to 200°C is 70 % by mass or more of the whole organic components contained therein. More specifically, when carrying out the weight analysis by heating the fine silver particle composition at 10 °C/min of rate of temperature increase, a weight loss until 200°C is 70 % or more of a weight loss until 500°C which is measure in the same manner.

The temperature of 200°C of the above mass analysis is a temperature for bonding at a low temperature, and the weight loss until 200°C corresponds to a percentage to be volatilized of the organic substance in the fine silver particle composition when heating the fine silver particle composition at a low temperature (for example, 150°C). When the weight loss is 70 % or more of the whole organic components, the organic substances almost completely disappear even under real bonding conditions, and the fine silver particles are sintered to form a dense bonding layer. On the other hand, when the weight loss until 200°C is less than 70 % of the whole organic components, there remain organic substances which is difficult to be volatilized at a low temperature, and thus the sintering of the fine silver particles cannot be promoted sufficiently.

Further, in the fine silver particle composition of the present invention, a content of the whole organic components is preferably 25.0 % by mass or less. More specifically, when carrying out the weight analysis by heating the fine silver particle composition at 10 °C/min of rate of temperature increase, a weight loss until 500°C is preferably 25 % by mass or less. The weight loss obtained by this method corresponds to the amount of the whole organic components in the fine silver particle composition.

When the weight loss (the whole organic substance) until 500°C is too large, since the organic substance remains after sintering to yield voids, which results in factors to lower the bonding strength and/or conductivity of the bonding layer. Particularly, in order to obtain a bonding layer having high conductivity by bonding at a low temperature around 150°C, it is preferable that the value of the weight loss is 25 % by mass or less. On the other hand, in order to maintain the dispersion stability of the fine silver particles in the colloidal state, it is preferable that the value of the weight loss is 2 % by mass or more. More preferable range of the weight loss (the whole organic substance) until 500°C is 5 to 20 % by mass.

(2) Producing method of fine silver particle

In order to produce the fine silver particle of the present embodiment, the fine silver particles (silver colloidal particles) coated with the alkoxyamine as a main component are prepared.

Furthermore, the adjustment of an amount of the dispersant containing alkoxyamine and a weight reduction percentage is not particularly limited, but it is easy to adjust with heating. The amount of the dispersant containing akloxyamine to be added on the occasion of preparation of the metal particles may be adjusted. The conditions of washing or the number of times of washing after the preparation of the fine silver particles may be changed. Further, heating can be performed with an oven, an evaporator or the like. Heating temperature should be within the range of approximately 50 to 300 °C, and a heating time should be for several minutes to several hours. Heating may be performed under reduced pressure. An amount of the organic substances can be adjusted at lower temperature by heating under reduced pressure. In the case of performing under normal pressure, it can be heated in the atmosphere or in an inert atmosphere, as well. In addition, the alkoxyamine can be added for fine adjustment of an amount of the organic substances, as well.

A method for preparing the fine silver particles coated with the alkoxyamine in the present embodiment is not particularly limited, and for example, a method where a dispersion liquid containing the fine silver particles is prepared, and next this dispersion liquid is washed or the like is exemplified. As a process to prepare the dispersion liquid containing the fine silver particles, for example, as mentioned below, silver salt (or silver ion) dissolved in a solvent should be reduced, and as reduction procedures, procedures based upon a chemical reduction method should be adopted. Further, a metal amine complex method can also be used.

Namely, the fine silver particles coated with the dispersant containing alkoxyamine can be prepared by reducing a raw material solution containing a silver salt constituting the fine silver particle, the dispersant containing the alkoxyamine, the polymer dispersant and the dispersion medium. Furthermore, a portion of components in the raw material solution may not be dissolved but dispersed, and water may be contained.

This reduction enables to obtain the silver colloidal particle where the dispersant containing the alkoxyamine is adhered to at least a part of surfaces of the fine silver particle. This silver colloidal particle can be supplied as is as the conductive paste of the present embodiment, but it can be obtained as a conductive paste made from the silver colloidal dispersion liquid by adding this into a dispersion medium in the process described below as needed.

As a starting material for obtaining the fine silver particles coated with the dispersant containing the alkoxyamine, various well-known silver salts or their hydrates can be used, and examples include silver salts such as silver nitrate, silver sulfate, silver chloride, silver oxide, silver acetate, silver oxalate, silver formate, silver nitrite, silver chlorate or silver sulfide, and the like are exemplified, but salts are not particularly limited as long as they can be dissolved in any appropriate dispersion solvent, and, are reducible. Further, these may be used alone or in combination of two or more

Further, a method to reduce these silver salts in the raw material liquid is not particularly limited, and for example, a method using a reducing agent, a method to irradiate a light such as ultraviolet rays, electron beams, ultrasonic waves or thermal energy, a method to heat, and the like are exemplified. Among them, the method using a reducing agent is preferable from a viewpoint of easy operation.

Examples of the reducing agent include, for example, amine compounds such as dimethylaminoethanol, methyldiethanolamine, triethanolamine, phenidone or hydrazine; for example, hydrogen compounds such as sodium borohydride, iodinated hydrogen or hydrogen gas; for example, oxides such as carbon monoxide or sulfurous acid; for example, low-valent metal salts such as ferrous sulfate, ferric oxide, iron fumarate, ferrous lactate, iron oxalate, ferric sulfide, tin acetate, tin chloride, diphosphate tin, tin oxalate, tin oxide or tin sulfate; for example, sugar such as ethylene glycol, glycerin, formaldehyde, hydroquinone, pyrogallol, tannin, tannic acid, salicylic acid or D-glucose, but the reducing agent is not particularly limited as long as it is dissolved into a dispersion medium and can reduce the above metal salt. In case of using the reducing agent, a reduction reaction can be accelerated by adding a light and/or heat.

As a specific method to prepare the fine silver particles coated with the dispersant containing the alkoxyamine by using the silver salt, the dispersant containing the alkoxyamine, the dispersion medium and the reducing agent, for example, there is a method where the silver salt is dissolved into an organic solvent (for example, toluene or the like) to prepare a silver salt solution, an organic substance is added as the dispersant into the silver salt solution, and next, a solution where the reducing agent has been dissolved is gradually added dropwise into this mixture, and the like.

A counter ion of the silver salt, a residue of the reducing agent and the dispersant other than the fine silver particles exist in a dispersion liquid containing the fine silver particles coated with the dispersant containing the alkoxyamine obtained as mentioned above, and electrolyte concentration and organic substance concentration of the entire liquid tends to be high. Since the liquid in such condition has high conductivity, and the like, coagulation of the fine silver particles occurs and they are easily precipitated. Alternatively, even if the fine silver particles are not precipitated, if a counter ion of the silver salt, a residue of the reducing agent or a more than necessary amount for dispersion of excess dispersant remains, the conductive property may be deteriorated. Then, the fine silver particles coated with the organic substance can be certainly obtained by washing the solution containing the fine silver particles to remove any excessive residues.

As the washing method, for example, a method to repeat a process where a dispersion liquid containing the fine silver particles coated with the dispersant containing the alkoxyamine is set stationary for a certain period of time, and after a generated supernatant solution is removed, an alcohol (methanol, etc.) is added and the mixture is stirred again, and the mixture is further set stationary for a certain period of time and the generated supernatant solution is removed, several times; a method for centrifugal separation instead of setting stationary; a method for demineralization by an ultrafiltration apparatus or ion-exchange equipment and the like are exemplified. The fine silver particles coated with the dispersant containing the alkoxyamine of the present embodiment can be obtained by removing excess residues with such washing, and, by removing the organic solvent.

The fine silver particle composition is obtained by mixing the fine silver particles coated with the dispersant containing the alkoxyamine obtained above and the dispersion medium. Such method for mixing the fine silver particles coated with the dispersant containing the alkoxyamine and a dispersion medium is not particularly limited, and it can be conducted with a conventionally well-known method using an agitator or a stirrer. Mixing can be stirred with a spatula, and an ultrasonic homogenizer with appropriate output may be aimed.

When a metal colloidal dispersion liquid containing a plurality of metals is obtained, the producing method is not particularly limited, and for example, if a metal colloidal dispersion liquid made from silver and other metals is manufactured, a dispersion liquid containing metal particles and another dispersion liquid containing other metal particles are separately manufactured in the preparation of metal particles coated with the organic substance above, and these may be mixed later, and a silver ion solution and other metal ion solution may be mixed and then be reduced.

In the case of using the metal amine complex method, for example, the fine silver particles may be produced through a first step where the dispersant containing the alkoxyamine and the silver compound containing silver atom are mixed to produce a complex compound containing the silver compound and the alkoxyamine; and a second step where the complex compound is decomposed by heating to produce the fine silver particles.

For example, silver particles protected with a protective film of alkoxyamine can be manufactured by heating a metal compound, such as silver nitrate containing silver, and a complex compound generated from alkoxyamine in the presence of alkoxyamine, and by agglomerating atomic silver that is generated by decomposing a metal compound of oxalate ion contained in the complex compound.

Accordingly, in the metal amine complex decomposition method for producing the fine silver particle coated with the alkoxyamine by thermally decomposing the complex compound of the metal compound in the presence of the alkoxyamine, by the decomposition reaction of the metal amine complex which is single variety of molecule, a conductive sintered layer can be produced through heating and sintering. When sintering, the temperature can be increased and decreased in a step-by-step manner, as well. Further, it is also possible to previously apply a surfactant or a surface-active agent to a surface where the conductive dispersion is applied.

Further, in the metal amine complex decomposition method, the alkoxyamine molecule is bonded to the produced metal atom in the manner of coordinate-bond, and it seems that movement of the metal atom at the time when generating agglomeration is controlled by a function of the alkoxyamine molecule which is coordinated to the metal atom. As a result, according to the metal amine complex decomposition method, it is possible to produce very fine silver particles having narrow particle size distribution.

In addition, many alkoxyamine molecules also generate comparatively weak force of coordinate bond on the surface of the fine silver particles to be produced, and because these form a dense protective coating on the surfaces of the fine silver particles, it is possible to produce coated silver particles where their surfaces excelling in preservation stability are clean. Further, because the alkoxyamine molecules forming the coating may be easily removed by heating or the like, it is possible to produce the fine silver particles, which can be sintered at a very low temperature.

Further, when producing a composite compound such as a complex compound by mixing a solid metal compound and the alkoxyamine, production of the composite compound such as a complex compound becomes easy by mixing and using a short-chain alkoxyamine having 5 or less carbon atoms into a long-chain/medium-chain alkoxyamine mainly constituting a coating film comprising the coated fine silver particles, and it is possible to produce the composite compound by mixing for a short time. Further, it is possible to produce the coated fine silver particles having characteristics according to various uses by mixing the short-chain alkoxyamine.

Although the fine silver particle composition of the present embodiment obtained as mentioned above is usable as a composition for bonding metal as is, various inorganic components and organic components can be added as long as being within the scope that will not impair the dispersion stability and the low-temperature sinterability of the fine silver particle composition.

[Application method]

When the fine silver particle composition of the present embodiment is used, after applying onto a substrate, the conductive dispersion is sintered with heating and baking at a relatively low temperature (for example, 300°C or less, preferably 100°C to 200°C) to obtain an conductive sintered layer. When sintering, the temperature can also be increased and decreased in a step-by-step. Further, it is also possible to previously apply a surfactant or a surface active agent on a surface where the conductive dispersion is applied.

Here, "application" of the fine silver particle composition of the present embodiment is a concept including a case of applying the fine silver particle composition in a planar manner and a case of applying (drawing) in a linear manner, as well. It is possible for the configuration of the applied coating made from the fine silver particle composition before heating and baking to be a desired configuration. Therefore, the coating of the fine silver particle composition of the present embodiment sintered with heating and baking is a concept including both the planer coating and the linear coating, and these planar coating and linear coating can be continuous and discontinuous, and can include a continuous portion and a discontinuous portion.

A substrate usable in the present embodiment is not particularly limited even it should be able to be sintered by applying the conductive dispersion and then heating and baking the fine silver particle composition, and it is preferable to be a member having a heat resistance to a degree of not being damaged at a temperature upon heating and baking.

Examples of materials to constitute the substrate include a polyester such as polyamide (PA), polyimide (PI), polyamideimide (PAI), polyethylene terephthalate (PET), polybutylene terephthalate (PBT) or polyethylene naphthalate (PEN); polycarbonate (PC), polyether sulfone (PES), a vinyl resin, a fluorine-containing resin, a liquid crystal polymer, a ceramic, a glass, a metal, and the like.

Further, the substrate may be in various configurations, for example, plate-like or strip-like, and it may be rigid or flexible. The thickness of the substrate can be appropriately selected. For improvement of bonding property or adhesiveness or for other purpose, a member where a surface layer is formed or a member where a surface treatment such as a hydrophilic treatment is applied may be used.

It is possible to use various methods in the step for applying the fine silver particle composition onto the substrate, and to employ appropriately by selecting from, for example, dipping, screen printing, reversal printing, micro contact printing, spraying, bar-coating, spin-coating, inkjet, dispenser, a pin transfer method, a stamping method, an application system with a brush, casting, flexo, gravure, an offset method, a transfer method, a hydrophilic and hydrophobic pattern method, a syringe, and the like.

In the present embodiment, when the fine silver particle composition contains a binder component, the binder component may be sintered from a viewpoint of improvement of strength of a coating, and the like, but the binder component can be all removed by controlling baking conditions, in order to adjust a viscosity of the fine silver particle composition for applying to various printing methods as principal purposes of the binder component.

The method for heating and baking is not particularly limited, but the fine silver particle composition can be sintered by heating and baking so as to cause a temperature of the conductive dispersion applied or drawn on the substrate, for example, at 300°C or less, using, for example, a conventionally well-known oven, or the like. The lower limit of the temperature for heating and baking is not particularly limited, and it can be a temperature within a scope of not impairing the effects of the present invention. Here, in the coating after baking, the smaller residual volume of the organic substance is better from a point to obtain higher strength as much as possible, but a portion of the organic substance may remain within a scope of not impairing the effects of the present invention.

[Bonding method]

In case that the fine silver particle composition of the present embodiment is used, high bonding strength can be obtained in bonding of members in association with heating. Namely, a first member to be bonded and a second member to be bonded can be bonded by an application step of the composition for bonding to apply the fine silver particle composition between the first member to be bonded and the second member to be bonded, and a bonding step to bake and bond the composition for bonding that has been applied between the first member to be bonded and the second member to be bonded at a desired temperature (for example, 300°C or less, preferably 100°C to 200°C).

In the bonding step, pressure can be applied in the direction where the first member to be bonded and the second member to be bonded are diagonal, but it is one of the advantages of the present invention to be able to obtain a sufficient bonding strength without particular pressurization. Further, when sintering, the temperature can also be increased and decreased in a step-by-step. Further, it is also possible to previously apply a surfactant or a surface active agent on a surface where the conductive dispersion is applied.

The present inventors, as a result of intensive study, have found that the first member to be bonded and the second member to be bonded can be more securely bonded with high bonding strength (a bonded body can be obtained), when the fine silver particle composition of the present embodiment is used as the fine silver particle composition in the application step of the fine silver particle composition.

As the dispersion medium of the fine silver particle composition of the present invention, various substances are usable within a scope not impairing the effects of the present invention, and for example, a hydrocarbon, an alcohol, and the like can be exemplified.

Examples of the aliphatic hydrocarbon include a saturated or unsaturated aliphatic hydrocarbon such as tetradecane, octadecane, heptamethylnonane, tetramethylpentadecane, hexane, heptanes, octane, nonane, decane, tridecane, methylpentane, normal paraffin and isoparaffin, and the like.

The first member to be bonded and the second member to be bonded is not particularly limited even it should be able to be sintered by applying the composition for metal bonding and then heating to obtain the bonding, and it is preferable to be a member having a heat resistance to a degree of not being damaged at a temperature upon heating and baking.

Examples of materials to constitute the member to be bonded include a polyester such as polyamide (PA), polyimide (PI), polyamideimide (PAI), polyethylene terephthalate (PET), polybutylene terephthalate (PBT) or polyethylene naphthalate (PEN); polycarbonate (PC), polyether sulfone (PES), a vinyl resin, a fluorine-containing resin, a liquid crystal polymer, a ceramic, a glass, a metal, and the like, and preferable is the metal member to be bonded. The reason why the metal member to be bonded is preferable is that metal member is excellent in heat resistance and also is compatible with the fine silver particle composition which has a metal (silver) as a main component of the present invention.

Further, the member to be bonded may be in various configurations, for example, plate-like or strip-like, and it may be rigid or flexible. The thickness of the substrate can be appropriately selected. For improvement of bonding property or adhesiveness or for other purpose, a member where a surface layer is formed or a member where a surface treatment such as a hydrophilic treatment is applied may be used.

It is possible to use various methods in the step for applying the fine silver particle composition to the member to be bonded, and to employ appropriately by selecting from, for example, dipping, screen printing, spraying, bar-coating, spin-coating, inkjet, dispenser, a pin transfer method, a stamping method, an application system with a brush, casting, flexo, gravure, an offset method, a transfer method, a hydrophilic and hydrophobic pattern method, a syringe, and the like.

As mentioned above, the coating after applied is baked by heating, for example, at a temperature of 300°C or less (preferably 100 to 200°C) within a scope not impairing the member to be bonded to obtain the bonded article of the present embodiment. In the present embodiment, as mentioned before, since the fine silver particle composition of the present invention is used, the bonding layer having an excellent adhesion to the member to be bonded, and a strong bonding strength can be exactly obtained.

In the present embodiment, when the fine silver particle composition contains a binder component, the binder component may be sintered from a viewpoint of improvement of strength of the bonding layer, and improvement of strength between the members to be bonded, and the like, but the binder component can be all removed by controlling baking conditions, in order to adjust a viscosity of the fine silver particle composition for applying to various printing methods as principal purposes of the binder component.

The method for baking is not particularly limited, but the composition for metal bonding can be sintered by baking so as to cause a temperature of the fine silver particle composition applied or drawn on the member to be bonded, for example, at 300°C or less (preferably 100 to 200°C), using, for example, a conventionally well-known oven, or the like. The lower limit of the temperature for baking is not particularly limited, and can be a temperature that the members to be bonded can be bonded to each other and is within a scope of not impairing the effects of the present invention. Here, in the fine silver particle composition after baking, the smaller residual volume of the organic substance is better from a point to obtain higher strength as much as possible, but a portion of the organic substance may remain within a scope of not impairing the effects of the present invention.

Furthermore, an organic substance is contained in the fine silver particle composition of the present invention, but unlike a conventional one utilizing thermal curing, such as an epoxy resin, this does not obtain the bonding strength after baking due to action of the organic substance, but it obtains a sufficient bonding strength due to fusion of the fused fine silver particles as described above. Accordingly, after bonding, even if the organic substance remained because of placing in an environment to be used where the temperature is higher than the bonding temperature is deteriorated or decomposed and then has disappeared, there is no possibility to cause reduction of the bonding strength, and therefore, it has an excellent heat resistance.

According to the fine silver particle composition of the present embodiment, because a bonding having a bonding layer expressing a high conductive property can be realized even by baking with a low-temperature heating, for example, at approximately 100°C to 200°C, the members to be bonded, which are relatively weak against heat, can be bonded. Further, the baking time is not particularly limited, but it should be a baking time that can cause bonding according to the baking temperature.

In the present embodiment, in order to further enhance the adhesiveness between the members to be bonded and the bonding layer, the surface treatment can be applied to the members to be bonded. Examples of the surface treatment method include a method of performing dry processing such as corona treatment, plasma treatment, UV treatment or electron-beam treatment; a method where a primer layer or a conductive paste receptive layer is pre-established on the substrate, and the like are exemplified.

In the above, the representative embodiments of the present invention are explained, but the present invention is not limited thereto.

In the following, the fine silver particle composition, and the producing method thereof according to the present invention are explained more specifically in EXAMPLE, but the present invention is not be limited to those examples.

EAXMPLE

<<Example 1>>

200 ml of toluene (first class grade chemicals manufactured by Wako Pure Chemical Industries, Ltd.) and 15 g of 3-ethoxypropylamine (first class grade chemicals manufactured by Wako Pure Chemical Industries, Ltd.) were mixed and sufficiently stirred with a magnetic stirrer. While stirring, 10 g of silver nitrate (special grade chemicals manufactured by Toyo Chemical Industrial Co., Ltd.) was added into this mixture, and after the silver nitrate was dissolved, 10 g of hexanoic acid (special grade chemicals manufactured by Wako Pure Chemical Industries, Ltd.) were added. A 0.02 g/ml of sodium borohydride solution prepared by adding 1 g of sodium borohydride (manufactured by Wako Pure Chemical Industries, Ltd.) into 50 ml of ion-exchanged water was instilled into this mixture, and a liquid containing silver particles was obtained. After stirring for one hour, 200 ml of methanol (special grade chemicals manufactured by Wako Pure Chemical Industries, Ltd.) was added, and the silver particles were agglomerated and precipitated. In addition, after the silver particles were completely precipitated with centrifugal separation, toluene and methanol, which are supernatants, were removed and excess organic substances were removed, and approximately 6 g of the fine silver particles were obtained. After adding 0.20 g of nonanol (manufactured by Wako Pure Chemical Industries, Ltd.) as a dispersing medium to 2 g of the obtained fine silver particles and kneading, a fine silver particle composition 1 was obtained.

[Evaluation tests]

(1) Thermogravimetric method

A content of the organic component contained in the fine silver particle composition 1 which was obtained as mentioned above was measured according to thermogravimetric method. Specifically, the composition 1 for bonding was heated at 10 °C/min of rate of temperature increase, and the content of the organic component was identified as a weight loss at room temperature to 500°C and room temperature to 200°C. Results are shown in Table 1. Here, the "room temperature" mentioned above may vary according to the season within the range of 10 to 30°C, but there is not any weight loss in the range of 10 to 30°C.

(2) Measurement of bonding strength

By using Die Bonder (manufactured by HISOL, Ltd.), a small amount of the composition for bonding 1 obtained as mentioned above was applied onto an alumina plate (50 mm square) where its surface had been gold-plated, and a commercially available blue LED chip (manufactured by GeneLite Inc., an area of base: 600 $\mu$m $\times$ 600 $\mu$m) was laminated onto the alumina plate. At that time, the blue LED chip was not pressurized by applying external force. Then, the laminated body was placed into a circulating hot air oven, and, after rising to 150°C, sintered under atmospherics for 120 minutes. After cooling to 50°C or low, the laminated body was taken out from the circulating hot air oven, a bonding strength test was conducted at room temperature (10 to 30°C) by using Bonding Tester (manufactured by Rhesca Corporation). The bonding strength upon shearing of the blue LED chips was divided by an area of bottom of the chip, and the results are shown in Table 1. The unit of the bonding strength is MPa.

(3) Measuring method of viscosity

Viscosity of the fine silver particle composition 1 was measured by using a cone-plate viscometer (Rheometer, MCR301 manufactured by Anton Paar GmbH). Measurement conditions were measurement mode: shearing mode, shearing rate: 10 s-1, cone plate (CP-50-2: 50 mm of diameter, angle: 2°, gap: 0.045 mm), and measurement temperature: 25°C. The obtained results are shown in Table 1. In case of applying the composition with the Die Bonder used in the above bonding measurement, since, when the viscosity measured according to the above method is within around 3 to 80 Pa • s, the application is seemed easy, a case where the viscosity is within the rage is represented by o, and the others are represented by x.

(4) Method for measuring void ratio

The sheared off surface after measuring the bonding strength was observed (at 25°C) by a microscope (for example, Microscope VHX-2000 available from KEYENCE CORPORATION), and a void ratio was calculated according to the equation: Area of void part / Area of chip $\times$ 100.

<<Example 2>>

7.0 g of 3-ethoxypropylamine (first class grade chemicals manufactured by Wako Pure Chemical Industries, Ltd.) and 0.50 g of dodecylamine (first class grade chemicals manufactured by Wako Pure Chemical Industries, Ltd.) were mixed and sufficiently stirred with a magnetic stirrer. Thereto 6.0 g of silver oxalate was added under stirring to be viscous. Next, the obtained viscous substance is entered in a thermostatic bath of 100°C, and then reacted for about 15 minutes. In order to replace the dispersing medium of the suspension after the reaction, 10 ml of methanol (first class grade chemicals manufactured by Wako Pure Chemical Industries, Ltd.) was added to the suspension and stirred, and then the fine silver particles were separated by precipitation by centrifugal procedure, and thereafter, 10 ml of methanol (first class grade chemicals manufactured by Wako Pure Chemical Industries, Ltd.) was added again to the separated fine silver particles, the fine silver particles were separated by precipitation by stirring and centrifugal procedure. To 6 g of the obtained fine silver particles, 0.80 g of tetradecane (first class grade chemicals manufactured by Wako Pure Chemical Industries, Ltd.) was added as the dispersing medium and kneaded to obtain a fine silver particle composition 2. Various evaluations were conducted to the composition in the same manner as in Example 1, and the results are shown in Table 1.

<<Example 3>>

A fine silver particle composition 3 was obtained in the same manner as in Example 2 except that 3-ethoxypropylamine was changed to 3-methoxypropylamine (first class grade chemicals manufactured by Wako Pure Chemical Industries, Ltd.) and tetradecane was changed to 1.2 g of isotridecanol (available from KH Neochem Co., Ltd.). Various evaluations were conducted to the composition in the same manner as in Example 1, and the results are shown in Table 1.

<<Example 4>>

A fine silver particle composition 4 was obtained in the same manner as in Example 2 except that 0.03 g of SOLSPERSE 16000 (available from Lubrizol Corporation) was added as the additive. Various evaluations were conducted to the composition in the same manner as in Example 1, and the results are shown in Table 1.

<<Example 5>>

A fine silver particle composition 5 was obtained in the same manner as in Example 3 except that 0.03 g of SOLSPERSE 21000 (available from Lubrizol Corporation) was added as the additive. Various evaluations were conducted to the composition in the same manner as in Example 1, and the results are shown in Table 1.

<<Example 6>>

A fine silver particle composition 6 was obtained in the same manner as in Example 3 except that 0.1 g of Terusolve MTPH (available from Nippon Terpene Chemical Inc.) was added as the additive, and isotridecanol was changed to decanol. Various evaluations were conducted to the composition in the same manner as in Example 1, and the results are shown in Table 1.

<<Example 7>>

A fine silver particle composition 7 was obtained in the same manner as in Example 5 except that the additive was SOLSPERSE 3000, the amount of isotridecanol was decreased to 0.4 g, and 0.4 g of phenylcyclohexane was added. Various evaluations were conducted to the composition in the same manner as in Example 1, and the results are shown in Table 1.

<<Example 8>>

A fine silver particle composition 8 was obtained in the same manner as in Example 3 except that 0.1 g of ricinoleic acid was added as the additive, the amount of isotridecanol was decreased to 0.6 g, and 0.6 g of tridecane was added. Various evaluations were conducted to the composition in the same manner as in Example 1, and the results are shown in Table 1.

<<Comparative Example 1>>

A comparative fine silver particle composition 1 was obtained in the same manner as in Example 2 except that the amount of 3-ethoxypropylamine was 3.5 g, and the amount of dodecylamine was 1.5 g. Various evaluations were conducted to the composition in the same manner as in Example 1, and the results are shown in Table 1.

<<Comparative Example 2>>

A comparative fine silver particle composition 2 was obtained in the same manner as in Example 4 except that the amount of 3-ethoxypropylamine was 14.0 g, the amount of dodecylamine was 1.0 g, and the amount of tetradecane was 1.6 g. Various evaluations were conducted to the composition in the same manner as in Example 1, and the results are shown in Table 1.

<<Comparative Example 3>>

A comparative fine silver particle composition 3 was obtained in the same manner as in Example 4 except that the amount of tetradecane was 2.0 g. Various evaluations were conducted to the composition in the same manner as in Example 1, and the results are shown in Table 1.

<<Comparative Example 4>>

A comparative fine silver particle composition 4 was obtained in the same manner as in Example 6 except that the amount of 3-methoxypropylamine was 14.0 g, the amount of dodecylamine was 1.5 g, the amount of Terusolve MTPH was 0.2 g, and the amount of decanol was 1.5 g. Various evaluations were conducted to the composition in the same manner as in Example 1, and the results are shown in Table 1.

[Table 1]

| | | Ex.1 | Ex.2 | Ex.3 | Ex.4 | Ex.5 | Ex.6 | Ex.7 | Ex.8 | Com. Ex.1 | Com. Ex.2 | Com. Ex.3 | Com. Ex.4 |
|---|---|---|---|---|---|---|---|---|---|---|---|---|---|
| Boiling point of dispersing medium | | 215 | 254 | 254 | 254 | 254 | 233 | 254/240 | 254/234 | 254 | 254 | 254 | 233 |
| Content of dispersant (wt%) | | 4 | 5 | 3 | 5 | 3 | 4 | 2 | 3 | 5 | 12 | 5 | 10 |
| Thermogravimetric analysis of composition (wt%) | Until 500°C | 13 | 16 | 19 | 15 | 19 | 20 | 14 | 19 | 17 | 32 | 30 | 31 |
| | Until 200°C | 10 | 12 | 17 | 13 | 16 | 16 | 13 | 17 | 10 | 24 | 13 | 18 |
| | Ratio until 200°C | 77 | 75 | 89 | 87 | 84 | 80 | 93 | 89 | 59 | 75 | 43 | 58 |
| (Mpa) | Bonding strength | 17 | 20 | 26 | 21 | 28 | 19 | 28 | 20 | 9 | 8 | 8 | 5 |
| (Pa•s) | Viscosity | 22 | 15 | 13 | 20 | 10 | 7 | 20 | 8 | 10 | 2 | 1 | 1 |
| | Handling propert | ○ | ○ | ○ | ○ | ○ | ○ | ○ | ○ | ○ | × | × | × |
| Void ratio | | 10 | 15 | 20 | 10 | 15 | 15 | 5 | 10 | 10 | 40 | 35 | 40 |

With respect to the fine silver particle composition 1 to fine silver particle composition 8 according to the fine silver particle composition of the present invention, the weight losses when heating from room temperature to 200°C ("ratio until 200°C" in Table 1) are 70 % by mass or more of the whole organic components. In addition, the amounts of the whole organic components (the value of "to 500°C" in Table 1) are 25 % by mass or less, high bonding strength can be obtained in comparison with the comparative fine silver particle compositions.

Here, it has been found that sufficient bonding strength cannot be obtained in the comparative fine silver particle composition 1 where the amount of the whole organic components (the value of "to 500°C" in Table 1) is large, and in the comparative fine silver particle composition 2 where the weight losses when heating from room temperature to 200°C ("ratio until 200°C" in Table 1) is small.

In Comparative Example 1, since the ratio until 200°C is small, the organic components are not sufficiently volatized to be insufficient sintering of the particles, and in Comparative Example 2, since the ratio until 200°C is within the range, but the amounts of the dispersant and the whole organic components are large, the amount of the volatizing components during the sintering and the amount of the remaining organic components after the sintering are large, which results in lowering the shear strength. Further, In Comparative Example 3, since the amount of the solvent is large to make the amount of the whole organic components is out of the range, and the ratio until 200°C is small, the organic components are not sufficiently volatized at a low temperature to be insufficient sintering of the particles, and in Comparative Example 4, since the amount of the organic components are totally large, and the ratio until 200°C is not satisfied, the sintering is not enough.

## Claims

1. A fine silver particle composition comprising:

   fine silver particles,
   a dispersant containing an alkoxyamine, and
   a dispersing medium;
   wherein a content of the dispersant is 0.1 to 7.0 % by mass relative to a content of the fine silver particles, and
   wherein a weight loss when heating from room temperature to 200°C is 70 % by mass or more of a weight loss until 500 °C in the fine silver particle composition.

2. The fine silver particle composition according to claim 1, wherein the weight loss until 500 °C is 25.0 % by mass or less.

3. The fine silver particle composition according to claim 1 or 2, wherein the dispersing medium is an alcohol having a boiling point of 200°C or more, or a hydrocarbon having a boiling point of 200°C or more.

4. The fine silver particle composition according to any one of claims 1 to 3, further comprising a polymer dispersant.

5. The fine silver particle composition according to claim 4, wherein a content of the polymer dispersant is 0.01 to 10.0 % by mass relative to the content of the fine silver particles.

## Patentansprüche

1. Silberfeinteilchen-Zusammensetzung, die Folgendes umfasst:

   Silberfeinteilchen,
   ein Dispergiermittel, das ein Alkoxyamin enthält, und
   ein Dispergiermedium;
   wobei der Gehalt des Dispergiermittels in Bezug auf den Gehalt der Silberfeinteilchen 0,1 bis 7,0 Massen-% beträgt und
   wobei der Gewichtsverlust der Silberfeinteilchen-Zusammensetzung beim Erhitzen von Raumtemperatur auf 200 °C 70 Massen-% oder mehr des Gewichtsverlusts auf 500 °C beträgt.

2. Silberfeinteilchen-Zusammensetzung nach Anspruch 1, wobei der Gewichtsverlust auf 500 °C 25,0 Massen-% oder weniger beträgt.

3. Silberfeinteilchen-Zusammensetzung nach Anspruch 1 oder 2, wobei das Dispergiermedium ein Alkohol mit einem Siedepunkt von 200 °C oder mehr oder ein Kohlenwasserstoff mit einem Siedepunkt von 200 °C oder mehr ist.

**4.** Silberfeinteilchen-Zusammensetzung nach einem der Ansprüche 1 bis 3, die außerdem ein Polymerdispergiermittel umfasst.

**5.** Silberfeinteilchen-Zusammensetzung nach Anspruch 4, wobei der Gehalt des Polymerdispergiermittels in Bezug auf den Gehalt der Silberfeinteilchen 0,01 bis 10,0 Massen-% beträgt.

**Revendications**

**1.** Composition de fines particules d'argent comprenant :

de fines particules d'argent,
un dispersant contenant une alcoxyamine, et
un milieu de dispersion ;
dans laquelle une teneur du dispersant est de 0,1 à 7,0 % en masse par rapport à une teneur des fines particules d'argent, et
dans laquelle une perte de poids lors d'un chauffage de la température ambiante à 200 °C est de 70 % en masse ou plus d'une perte de poids jusqu'à 500 °C dans la composition de fines particules d'argent.

**2.** Composition de fines particules d'argent selon la revendication 1, dans laquelle la perte de poids jusqu'à 500 °C est de 25,0 % en masse ou moins.

**3.** Composition de fines particules d'argent selon la revendication 1 ou 2, dans laquelle le milieu de dispersion est un alcool ayant un point d'ébullition de 200 °C ou plus, ou un hydrocarbure ayant un point d'ébullition de 200 °C ou plus.

**4.** Composition de fines particules d'argent selon l'une quelconque des revendications 1 à 3, comprenant en outre un dispersant polymère.

**5.** Composition de fines particules d'argent selon la revendication 4, dans laquelle une teneur du dispersant polymère est de 0,01 à 10,0 % en masse par rapport à la teneur des fines particules d'argent.

**EP 3 284 552 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012162767 A
- JP 2012131894 A
- JP 2013214733 A